# EUROPEAN PATENT APPLICATION

(11) **EP 2 341 351 A1**
(43) Date of publication of application: **06.07.2011**
(21) Application number: 08877344.5
(22) Date of filing: 13.10.2008
(51) Int. Cl.: G01N 35/00, G06K 9/00

(54) **TEST PIECE READING DEVICE AND TEST PIECE USED THEREIN**

(71) Applicant: Actherm Inc., Hsinchu 30078 (TW)
(72) Inventor: KUO, Chien-Chih, Kaohsiung800 Taiwan (CN); HSIEH, Wen-Pin, Miaoli County 352 Taiwan (CN); TSENG, Ching-Tai, Changhua 521 Taiwan (CN)
(74) Representative: Lang, Christian
(86) International application number: PCT/CN2008/001724
(87) International publication number: WO 2010/043067

(57) **Abstract**

The invention discloses a test piece reading device and the test piece used therein. The test piece reading device comprises a housing, a monitor, a delivering device, an optical reader, a reaction signal reader and a control module. The test piece comprises at least one optically readable pattern which comprises identification information of the test piece.

## Description

### BACKGROUND OF THE INVENTION

### 1. Technical Field

The present invention relates to a reading apparatus, and more particularly, to a reading apparatus for biological test pieces.

### 2. Description of Related Art

With the progress of the medical industry and the electronic industry, a variety of detecting apparatuses, such as electronic ear thermometers and electronic sphygmomanometers, have been developed for family medical care. Among all biochemical or immunological detecting apparatuses, the more common ones are those for detecting blood glucose, uric acid or total cholesterol. Such kinds of detecting systems can be divided into optical systems and electrochemical systems, as distinguished by the reaction signals involved. The electrochemical systems are more frequently used.

Since detection of different test samples requires the use of different substances as reagents, it is necessary to use different test pieces in different types of tests. For example, blood glucose test pieces are needed in blood glucose tests while uric acid test pieces are called for in uric acid tests. In addition, in order to ensure the reliability of test results, only test pieces that have not passed their expiration dates can be used. On the other hand, a conventional detecting machine typically uses an additional calibration chip to store such calibration information as the types, lot numbers and expiration dates of test pieces. Prior to testing, a calibration chip corresponding to the type and lot number of the test pieces to be used is inserted into the socket of the detecting machine, allowing the detecting machine to not only read the calibration information from the calibration chip, but also display the type, the lot number and the expiration date of the test pieces, so that a user can confirm for himself/herself whether or not the calibration information displayed on the machine, such as the type and the lot number, belongs to the test pieces intended to be used, and whether or not the test pieces has passed the expiration date. In addition, the calibration chip may also contain calibration information regarding detection values of test pieces bearing the same lot number. Therefore, to ensure accurate test results, the test pieces in use must have the same lot number as that of the calibration chip. While using the detecting machine described above, the user has to verify the type, the lot number and the expiration date of test pieces on his/her own. Hence, in case of an inadvertent mistake, the user may erroneously use test pieces that belong to a wrong type, have passed their expiration dates or bear a different lot number from that of the calibration ship, thereby compromising the accuracy of test results.

Furthermore, most of the commercially available test pieces need to be inserted into or removed from the detecting machine manually. However, it usually happened that the user may accidentally come into contact with the test pieces during the manual operation, thereby contaminate the specimen and ruin the detection.

### BRIEF SUMMARY OF THE INVENTION

In order to solve the aforementioned problems, the present invention provides a test piece reading device for reading a reaction signal emitted from a test piece. The test piece reading device comprises a housing, a monitor, a delivering device, an optical reader, a reaction signal reader and a control module. The test piece for the reading apparatus has at least one reaction zone for presenting the reaction signal and at least one optically readable pattern with identification information of the test piece. The monitor is provided on the housing for displaying an analysis result. The delivering device is configured for supporting the test piece and moving the test piece along a preset route so as to deliver the test piece into or out of the housing. The optical reader is configured for reading identification information contained in the optically readable pattern of the test piece, wherein the identification information essentially comprises a type, a lot number and an expiration date of the test piece as well as reagent calibration data corresponding to the lot number. The reaction signal reader is configured for acquiring the reaction signal emitted from the test piece. In addition, the control module comprises a database sub-module and a processing sub-module, wherein the database sub-module is configured for algorithms corresponding to various types of test pieces, and the processing sub-module is configured for retrieving the algorithm stored in the database sub-module corresponding to the type of the test piece, combining the reagent calibration data corresponding to the lot number of the test pieces, and comparing the reaction signal from the test piece, so as to come out an analysis result of the assay.

Therefore, a principal objective of the present invention is to provide a test piece reading device, wherein an optical reader is provided and configured to read identification information contained in an optically readable pattern of a test piece, thereby enabling automatic comparison and verification of a type, a lot number and an expiration date of the test piece and reagent calibration data corresponding to the lot number. Thus, the incorrect operation or improper test piece can be prevented to ensure the reliability of analysis results.

Another objective of the present invention is to provide a test piece reading device comprising a delivering device so as to deliver the test piece along a preset route fast and stably.

Yet another objective of the present invention is to provide a test piece reading device comprising a delivering device for automatically delivering a test piece supported thereon into and out of a housing so as to avoid mutual contamination between a user and a specimen.

Yet another objective of the present invention is to provide a test piece reading device comprising a reaction signal reader for simultaneously acquiring reaction signals emitted from a biochemical test piece or an immunological test piece.

Still another objective of the present invention is to provide a test piece reading device comprising a reaction signal reader for separately acquiring reaction signals emitted from a biochemical test piece or an immunological test piece.

A further objective of the present invention is to provide a test piece reading device comprising an output device for outputting an analysis result of a test piece or an ID barcode by which the test piece corresponds to a test subject's data.

A further objective of the present invention is to provide a test piece reading device comprising an optical reader which is configured to also read anamnesis data of a test subject from whom a specimen to be analyzed is obtained, thereby further providing a function of data integration.

A further objective of the present invention is to provide a test piece reading device comprising an optical reader which is freely detachable to facilitate operation by a user.

A further objective of the present invention is to provide a test piece for being used in a test piece reading device, wherein the test piece has at least one reaction zone for presenting a reaction signal and at least one optically readable pattern with identification information of the test piece, wherein the identification information essentially comprises a type, a lot number and an expiration date of the test pieces as well as reagent calibration data corresponding to the lot number, and wherein the reaction zone and the optically readable pattern are defined at different locations, respectively.

Therefore, a further objective of the present invention is to provide a test piece for use in a test piece reading device, wherein the test piece reading device is configured to read identification information contained in an optically readable pattern of the test piece, thereby enabling automatic comparison and verification of a type, a lot number and an expiration date of the test piece as well as reagent calibration data corresponding to the lot number. In consequence, the incorrect operation or improper test piece can be prevented to ensure the reliability of analysis results.

A further objective of the present invention is to provide a test piece for use in a test piece reading device, wherein the test piece comprises at least one optically readable pattern with identification information of the test piece, in which the optically readable pattern can be a one-dimensional barcode or a two-dimensional barcode.

A further objective of the present invention is to provide a test piece for use in a test piece reading device, wherein the test piece comprises at least one optically readable pattern with identification information of the test piece, in which the optically readable pattern can be read with visible light, ultraviolet light or infrared light.

The invention as well as a preferred mode of use, further objectives and advantages thereof will be best understood by referring to the following detailed description of illustrative embodiments in conjunction with the accompanying drawings.

### BRIEF DESCRIPTION OF THE SEVERAL VIEWS OF THE DRAWINGS

Fig. 1A is a perspective view of a test piece reading device according to a first preferred embodiment of the present invention.
Fig. 1B is a perspective view of a test piece reading device according to another mode of the first preferred embodiment of the present invention.
Fig. 1C is a perspective view of the test piece reading device according to the first preferred embodiment of the present invention as observed from another viewing angle.
Fig. 2A is a perspective view of a test piece according to a second preferred embodiment of the present invention, wherein the test piece has a surface A defined with a reaction zone thereon.
Fig. 2B is a perspective view of the test piece according to the second preferred embodiment of the present invention, wherein the test piece has a surface B facing away from the surface A and defined with an optically readable pattern thereon.

### DETAILED DESCRIPTION OF THE INVENTION

The present invention discloses a test piece reading device in which the principles of biological detection and fundamental electromechanical mechanisms employed are well known to those of ordinary skill in the art. Therefore, a detailed description of such principles and mechanisms will be omitted herein for brevity. Besides, the drawings referred to herein are not drawn according to actual dimensions and need not be so because they are intended to demonstrate features of the present invention only schematically.

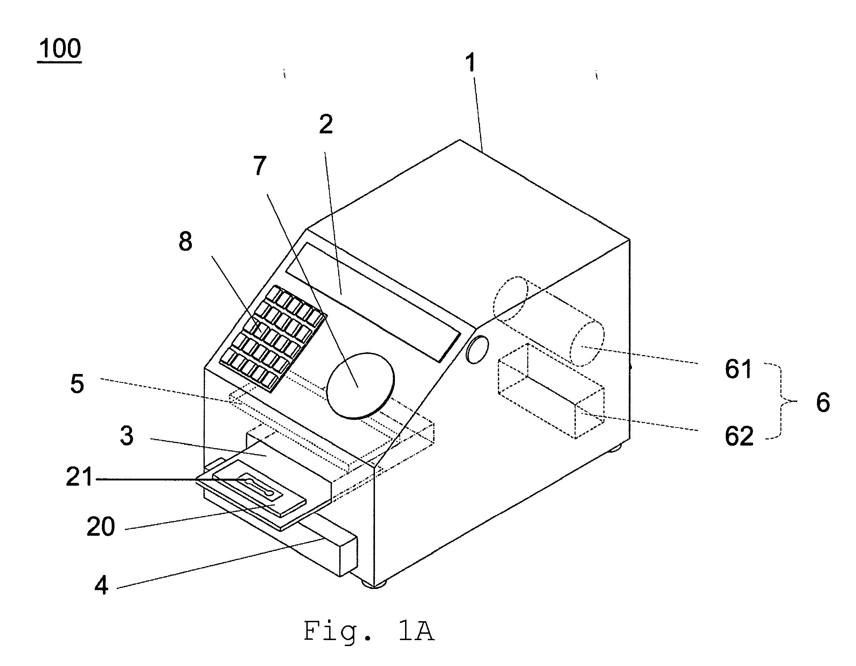

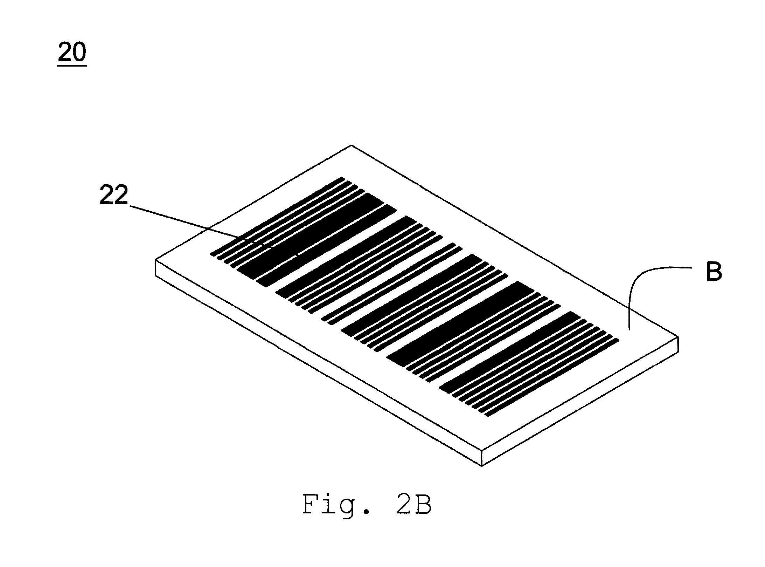

Please refer to Fig. 1A for a test piece reading device 100 according to a first preferred embodiment of the present invention. The test piece reading device 100, configured to read a reaction signal emitted from a test piece 20, includes a housing 1, a monitor 2, a delivering device 3, an optical reader 4, a reaction signal reader 5 and a control module 6. The test piece 20 comprises at least one reaction zone 21 for presenting the reaction signal, and at least one optically readable pattern 22 (as shown in Fig. 2B). The optically readable pattern 22 contains identification information of the test piece 20 and can be a one-dimensional barcode, a two-dimensional barcode or any optically readable patterns that are read with visible light, ultraviolet light or infrared light, so as to facilitate reading of the identification information of the test piece 20. The identification information includes a type, a lot number, and an expiration date of the test piece 20 as well as reagent calibration data corresponding to the lot number.

The monitor 2 is provided on the housing 1 for displaying an analysis result. The delivering device 3 is configured to support the test piece 20 and move the test piece horizontally along a preset route so as to deliver the test piece 20 automatically into or out of the housing 1. The delivering device 3 prevents unstable movement caused by manual operation and further provides a fast scanning function. According to the automatically delivering the test piece provided by the delivering device 3, it is not necessary for a user to place the test piece 20 into the test piece reading device 100 manually. Hence, by excluding manual operation, mutual contamination between the test piece and the user's fingers can be avoided to ensure the reliability of the analysis result and protect the operator from accidentally contacting a biological specimen and thus being exposed to biological hazards. In addition, the aforesaid delivering device 3 also solves the problem of difficult removal of a test piece designed with improper dimensions.

Referring again to Fig. 1A, the optical reader 4 is located indide the housing 1 for reading the identification information in the optically readable pattern 22 of the test piece 20. The optically readable pattern 22 of the test piece 20 can be read in two ways. The first way is that the optical reader 4 reads the optically readable pattern 22 of the test piece 20 on the preset route of the delivering device 3 when the delivering device 3 moves the test piece 20 into the housing 1. The other way is that the optical reader 4 reads the optically readable pattern 22 of the test piece 20 when the test piece 20 is delivered by the delivering device 3 to the endpoint of the preset route. Preferably, the optical reader 4 and the reaction signal reader 5 are located on vertically opposite sides of the preset route of the delivering device 3.

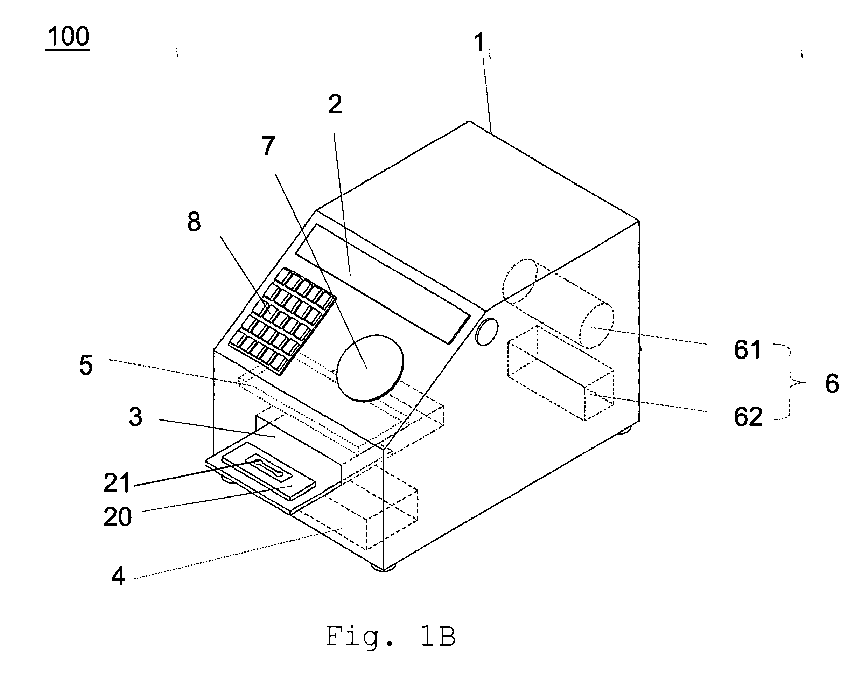

Referring now to Fig. 1B, the optical reader 4 may also be provided on a lateral side of the housing 1. This configuration allows the optical reader 4 to read the optically readable pattern 22 of the test piece 20 before the test piece 20 is placed in the delivering device 3. Besides, the optical reader 4 may also read an anamnesis barcode or ID barcode of a test subject corresponding to the test piece 20, thereby verifying whether or not the test piece 20 belongs to the test subject, as a way of recalibration, so that data integration can be done with respect to the test subject and the test piece 20. Moreover, the optical reader 4 may be freely detachable from the housing 1 to facilitate operation by the user. The optical reader 4, when detached, communicates with the test piece reading device 100 via wireless or wire-based transmission.

By coding the type, the lot number and the expiration date of the test piece 20 as well as the reagent calibration data corresponding to the lot number into the optically readable pattern 22 of the test piece 20 and by using the test piece 20 reading apparatus 100 to read such identification information automatically, inadvertent use of expired test pieces can be effectively prevented. It also avoids waste of specimen and ensures the reliability of analysis results. It is possessed of a significant improvement over the prior art in which information related to the test pieces is verified or input manually.

The reaction signal reader 5 is located inside the housing 1 for acquiring the reaction signal emitted from the reaction zone 21 of the test piece 20. The reaction signal may include a photoreaction signal or a electrochemical reaction signal. The reaction signal reader 5 acquires the reaction signal also in two ways. The first way is that the reaction signal reader 5 acquires the reaction signal when the delivering device 3 is delivering the test piece 20 into the housing 1 along the preset route. The other way is that the reaction signal reader 5 acquires the reaction signal after the delivering device 3 has delivered the test piece 20 to the endpoint of the preset route.

The control module 6 comprises a database sub-module 61 and a processing sub-module 62. The database sub-module 61 is configured for storing reaction signal data of test pieces of various types, such as the liquid detection data required for performing a blood glucose test, a total cholesterol test, an uric acid test and so on. The processing sub-module 62 is configured for reading, according to the type of the test piece 20, the reaction signal data stored in the database sub-module 61 corresponding to the type of the test piece 20, as well as the reagent calibration data corresponding to the lot number of the test piece 20, and comparing the reaction signal emitted from the test piece 20 against the data and the information read, so as to come out the analysis result. Additionally, according to the expiration date of the test piece 20, the processing sub-module 62 may also stop the reaction signal reader 5 from reading, or allow the reaction signal reader 5 to read, the reaction signal emitted from the test piece 20.

For example, during a blood glucose test, the test piece 20 is placed into the test piece reading device 100, so that the optical reader 4 reads the type of the test piece 20 to enable verification of the type as the appropriate one for the blood glucose test or otherwise. Meanwhile, the optical reader 4 also reads from the optically readable pattern 22 such identification information as the lot number and the expiration date of the test piece 20 for automatic comparison by the test piece reading device 100. If the type and the expiration date of the test piece 20 are verified as correct, the reaction signal reader 5 will read the reaction signal emitted from the test piece 20. The reaction signal acquired by the reaction signal reader 5 from the test piece 20 will be transmitted, along with the reaction signal data regarding the blood glucose test provided by the database sub-module 61 when the test piece reading device 100 verifies the test piece 20 as the correct one for the blood glucose test, in combination with the reagent calibration data contained in optically readable pattern 22 of the test piece 20, to the processing sub-module 62 for operation, so as to come out a blood glucose analysis result.

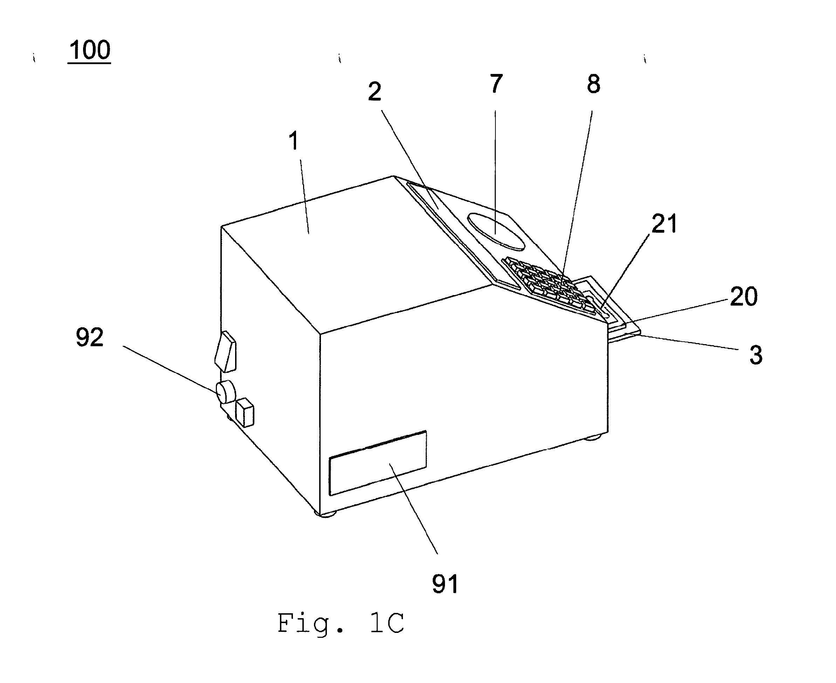

Referring to Fig. 1C, the test piece reading device 100 further includes an output device, such as a printer output port 91 and a USB output port 92, for outputting the analysis result. The test piece reading device 100 may also be provided with a Bluetooth (IEEE 802.15) output port (not shown) as appropriate.

Moreover, the test piece reading device 100 further includes an operation switch 7 which must be turned on first before the delivering device 3 delivering the test piece 20 along the preset route. The operation switch 7 further provides a terminating function such that operation of the test piece reading device 100 is terminated by operating the operation switch 7.

The test piece reading device 100 further includes an input keyboard 8. In the event that the test piece 20 does not contain information readable by the optical reader 4 or the optical reader 4 is damaged, the type, the lot number and the expiration date of the test piece 20 as well as the reagent calibration data corresponding to the lot number can be input manually via the input keyboard 8. The user may also use the input keyboard 8 to manually input the anamnesis barcode or ID barcode of the test subject into the test piece reading device 100. The manually inputted information can also be outputted via the output device such as the printer output port 91 and/or the USB output port 92.

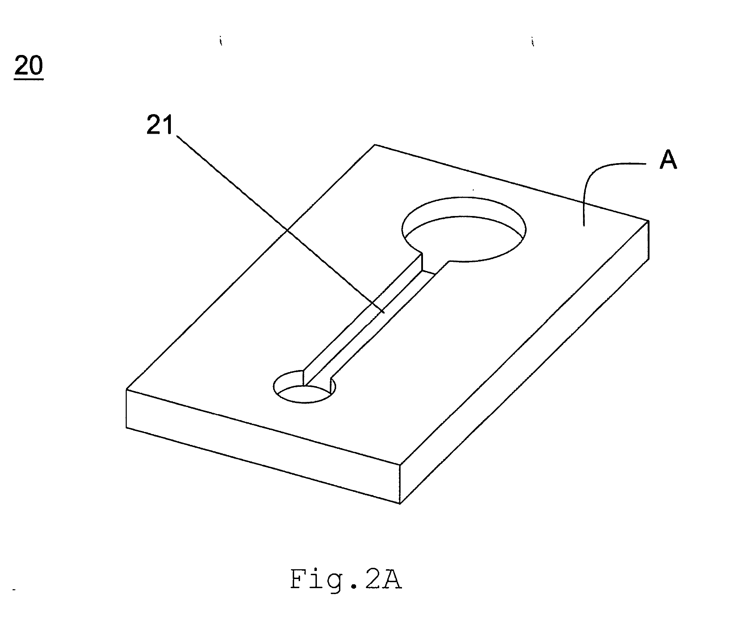

Reference is now made to Figs. 2A and 2B, wherein a second preferred embodiment of the present invention, namely a test piece 20 for being used in the test piece reading device 100, is shown. The test piece 20 has at least one reaction zone 21 for presenting a reaction signal, and at least one optically readable pattern 22. The optically readable pattern 22 contains identification information of the test piece 20, such as a type, a lot number and an expiration date of the test piece as well as reagent calibration data corresponding to the lot number. In a preferred configuration of the present invention, the reaction zone 21 and the optically readable pattern 22 are defined on two opposite surfaces of the test piece 20, respectively, wherein the two opposite surfaces of the test pieces 20 are not in contact with each other. For example, as shown in Figs. 2A and 2B, the reaction zone 21 is defined on a surface A of the test piece 20, and the optically readable pattern 22 is defined on an opposite surface B facing away from the surface A. Other features of the test piece 20 are identical to those of its counterpart in the first preferred embodiment of the present invention.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the spirit of the present invention should be encompassed by the appended claims.

## Claims

1. An test piece reading device for acquiring reaction signals emitted from reaction zones on a test piece by performing an assay for analytes, the test piece having at least one reaction zone for presenting the reaction signal and at least one optically readable pattern with identification information of the test piece, in which the identification information essentially comprises a type, a lot number and an expiration date of the test piece as well as reagent calibration data corresponding to the lot number, the test piece reading device essentially comprising a housing and a monitor provided on the housing, the test piece reading device being **characterized by** further comprising:
a delivering device for supporting and moving the test piece along a preset route so as to deliver the test piece into or out of the housing;
an optical reader for reading the identification information contained in the optically readable pattern of the test piece;
a reaction signal reader located inside the housing for acquiring the reaction signal emitted from the test piece; and
a control module comprising:
a database sub-module for storing algorithms corresponding to various types of test pieces; and
a processing sub-module for retrieving the algorithm stored in the database sub-module corresponding to the type of the test piece, combining the reagent calibration data corresponding to the lot number of the test piece, and comparing the reaction signal from the test piece, so as to come out an analysis result of the assay.

2. The test piece reading device of Claim 1, wherein the reaction signal reader acquires the reaction signal emitted from the test piece on the preset route of the delivering device while the test piece is moved into the housing.

3. The test piece reading device of Claim 1, wherein the reaction signal reader acquires the reaction signal emitted from the test piece after the test piece is moved to an endpoint of the preset route.

4. The test piece reading device of Claim 1, wherein the delivering device moves the test piece horizontally.

5. The test piece reading device of Claim 1, wherein the optical reader is located indide the housing and reads the optically readable pattern of the test piece while the test piece is moved along the preset route.

6. The test piece reading device of Claim 1, wherein the optical reader is located indide the housing and reads the optically readable pattern of the test piece after the test piece is moved to an endpoint of the preset route.

7. The test piece reading device of Claim 1, wherein the optical reader is provided on a lateral side of the housing and reads the optically readable pattern of the test piece before the test piece is moved into the housing.

8. The test piece reading device of Claim 7, wherein the optical reader further reads an anamnesis barcode of a test subject corresponding to the test piece, so as to perform data integration with respect to the test subject and the test piece.

9. The test piece reading device of Claim 7, wherein the optical reader further reads an ID barcode of a test subject corresponding to the test piece, so as to perform data integration with respect to the test subject and the test piece.

10. The test piece reading device of Claim 7, wherein the optical reader is freely detachable from the housing.

11. The test piece reading device of Claim 10, wherein the optical reader is detachable from the housing and, when detached, communicates with the test piece reading device through wireless transmission.

12. The test piece reading device of Claim 10, wherein the optical reader is detachable from the housing and, when detached, communicates with the test piece reading device through wire-based transmission.

13. The test piece reading device of Claim 1, wherein the optical reader and the reaction signal reader are located on opposite sides of the preset route.

14. The test piece reading device of Claim 1, wherein the test piece reading device further includes an operation switch which must be turned on first before the delivering device delivering the test piece along the preset route.

15. The test piece reading device of Claim 14, wherein the operation switch further provides a terminating function such that operation of the test piece reading device is terminated by operating the operation switch.

16. The test piece reading device of Claim 1, wherein the analysis result is displayed on the monitor.

17. The test piece reading device of Claim 1, wherein the test piece reading device further comprises an input keyboard for enabling manual input of the identification information of the optically readable pattern of the test piece.

18. The test piece reading device of Claim 1, further comprising an output device for outputting the analysis result of the test piece.

19. The test piece reading device of Claim 18, wherein the output device is a printer output port.

20. The test piece reading device of Claim 18, wherein the output device is a USB output port.

21. The test piece reading device of Claim 18, wherein the output device is a Bluetooth (IEEE 802.15) output port.

22. The test piece reading device of Claim 1, wherein the processing sub-module of the control module stops or allows the reaction signal reader acquiring the reaction signal emitted from the test piece according to the expiration date of the test piece.

23. The test piece reading device of Claim 1, wherein the optically readable pattern is a one-dimensional barcode.

24. The test piece reading device of Claim 1, wherein the optically readable pattern is a two-dimensional barcode.

25. The test piece reading device of Claim 1, wherein the optically readable pattern is read with visible light.

26. The test piece reading device of Claim 1, wherein the optically readable pattern is read with ultraviolet light.

27. The test piece reading device of Claim 1, wherein the optically readable pattern is read with infrared light.

28. The test piece reading device of Claim 1, wherein the reaction signal is a photoreaction signal.

29. The test piece reading device of Claim 1, wherein the reaction signal is an electrochemical reaction signal.

30. A test piece for being used in the test piece reading device of Claim 1 to 22, the test piece comprising:
at least one reaction zone for presenting at least one reaction signal; and
at least one optically readable pattern with identification information of the test piece, wherein the identification information essentially comprises a type, a lot number and an expiration date of the test piece as well as reagent calibration data corresponding to the lot number, and in which said at least one reaction zone and said at least one optically readable pattern are defined at different locations.

31. The test piece of Claim 30, wherein the test piece has two opposite and non-contact surfaces, the reaction zone and the optically readable pattern being defined on said surfaces, respectively.

32. The test piece Claim 30, wherein the optically readable pattern is a one-dimensional barcode.

33. The test piece Claim 30, wherein the optically readable pattern is a two-dimensional barcode.

34. The test piece Claim 30, wherein the optically readable pattern is read with visible light.

35. The test piece Claim 30, wherein the optically readable pattern is read with ultraviolet light.

36. The test piece Claim 30, wherein the optically readable pattern is read with infrared light.

37. The test piece Claim 30, wherein the reaction signal is a photoreaction signal.

38. The test piece Claim 30, wherein the reaction signal is an electrochemical reaction signal.
